# EUROPÄISCHE PATENTSCHRIFT

(11) **EP 4 396 046 B1**
(45) Veröffentlichungstag und Bekanntmachung des Hinweises auf die Patenterteilung: **27.05.2026**
(21) Anmeldenummer: 22773418.3
(22) Anmeldetag: 31.08.2022
(51) Int. Cl.: B60S 1/40, B60S 1/38

(54) **VORRICHTUNG FÜR EIN SCHEIBENWISCHSYSTEM EINES KRAFTFAHRZEUGS**
DEVICE FOR A SCREEN WIPING SYSTEM OF A MOTOR VEHICLE
DISPOSITIF POUR UN SYSTÈME D'ESSUIE-GLACE D'UN VÉHICULE AUTOMOBILE

(30) Priorität: 02.09.2021 DE 102021122692
(43) Veröffentlichungstag der Anmeldung: 10.07.2024
(73) Patentinhaber: Bayerische Motoren Werke Aktiengesellschaft, 80809 München (DE)
(72) Erfinder: BEITELSCHMIDT, Maximilian, 83629 Weyarn (DE); HERZINGER, Michael, 85235 Pfaffenhofen an der Glonn (DE)
(86) Internationale Anmeldenummer: PCT/EP2022/074169
(87) Internationale Veröffentlichungsnummer: WO 2023/031251

(56) Entgegenhaltungen:
- CA-A1- 2 898 928
- DE-A1- 102010 052 314
- DE-T5- 112015 003 232
- US-A1- 2014 259 507
- US-A1- 2015 013 095
- US-A1- 2018 162 326
- US-A1- 2019 031 151

## Beschreibung

### Gebiet der Erfindung

Die Erfindung betrifft eine Vorrichtung zum Verbinden eines Wischblatts mit einem Wischarm für ein Scheibenwischsystem eines Kraftfahrzeugs.

### Hintergrund der Erfindung

Ein herkömmliches Scheibenwischsystem für ein Kraftfahrzeug umfasst typischerweise einen am Kraftfahrzeug befestigten Wischarm. An diesem Wischarm ist wiederum ein austauschbares Wischblatt mittels eines Adapters befestigt. In bekannten Ausführungsformen können Wischblatt und Adapter einen Zusammenbau bilden. Das Wischblatt wird hierzu mit dem Adapter verbunden, und der Adapter kann in einer Adapteraufnahme an dem Wischarm lösbar befestigt werden.

Eine bekannte Befestigung für solch ein Standard-Wischsystem stellt eine Top-Lock-Verriegelung dar. Die Adapteraufnahme wird bei dieser Verriegelungsart auch häufig als "Schieber" bezeichnet. Dabei weist der Adapter des Wischblatts an einer von der Fensterscheibe wegweisenden Oberseite einen Druckknopf auf, um das mittels des Adapters befestigte Wischblatt vom Wischarm zu entriegeln.

Zusätzlich sind in den letzten Jahren die Wischarme zu Nassarmsystemen für die direkte Nassreinigung der Fensterscheibe weiterentwickelt worden: Im Wischarm befinden sich hierbei beispielsweise ein Schlauch zum Zuführen einer Reinigungsflüssigkeit sowie integrierte Waschdüsen.

Aus funktionalen Gründen sollen aber diese Waschdüsen und auch der Schlauch bevorzugt durch eine Abdeckkappe abgedeckt werden. Diese Abdeckkappe erstreckt sich dabei über den kompletten Wischarm, was den Zugang zu einem Top-Lock-Entriegelungsknopfs verhindern würde. Zudem wird die Abdeckkappe an der zur Fensterscheibe hinweisenden Unterseite der Adapteraufnahme über Rastmittel befestigt, was die Bedienbarkeit beim Wechseln des Wischblatts deutlich erschwert. Aus diesem Grund sind bei Nassarm-Wischsystemen andere Konzepte zur Entriegelung des Wischblatts notwendig.

Aus der US 2018/162326 A1 ist bereits eine Vorrichtung zum Verbinden eines Wischblatts mit einem Wischarm für ein Scheibenwischersystem eines Kraftfahrzeugs bekannt, die einen Adapter, der mit dem Wischblatt verbindbar ausgestaltet ist, und ein Aufnahmeelement umfasst, das mit dem Wischarm verbindbar ausgestaltet ist und eine Adapteröffnung zur Aufnahme des Adapters aufweist. Der Adapter weist wenigstens zwei zueinander verformbare Verriegelungsbereiche auf, die dazu eingerichtet sind, in einer Verriegelungsstellung den Adapter mit dem Aufnahmeelement zu verriegeln. Zudem umfasst die Vorrichtung ein Betätigungsmittel zum Entriegeln der Verriegelungsbereiche.

Für die oben beschriebenen Standard-Wischsysteme ohne Nassarm ist ferner aus der US 2019/0031151 A1 eine Verriegelung zwischen Wischarm und Wischblatt mittels eines Adapters bekannt, wobei die Verriegelung einen außerhalb der Adapteraufnahme angeordneten elastischen Verriegelungsarm mit einem Druckknopf aufweist. Der elastische Verriegelungsarm als Ver- bzw. Entriegelungsmittel weist jedoch den Nachteil auf, bei zu starker Beanspruchung schnell zu brechen. Zudem weisen die Ver- bzw. Entriegelungsmittel eine hohe Anzahl von Bestandteilen auf, die höhere Kosten und eine erschwerte Bedienung verursacht.

Ein ähnlicher Verriegelungsmechanismus für die Standard-Wischsysteme ist auch aus der FR 3 091 237 A1 bekannt.

Für Nassarm-Wischsysteme sind aus der US 2015/0013095 A1 unterschiedlichste Verriegelungsmechanismen bekannt. Unter anderem werden in Fig. 1 der US 2015/0013095 A1 verschiedene Ausführungsformen mit Haken, Armen mit seitlichen Stiften, Armen mit Druckknöpfen/Schiebern, und Armen mit Klemmlaschen aufgeführt. Diese Verriegelungsmechanismen würden aber den Einsatz der bevorzugten Abdeckkappe verhindern, da sich die Abdeckkappe wie oben beschrieben über den kompletten Wischarm erstrecken soll. Zudem leiden auch die Ver- bzw. Entriegelungsmittel unter dem Problem, auf kleinteilige Haken, Stifte, Arme und Klemmlaschen angewiesen zu sein, die die Bedienbarkeit erschweren und bei Überbeanspruchung leicht brechen. Auch hier weisen die Ver- bzw. Entriegelungsmittel eine hohe Anzahl von Bestandteilen auf, die höhere Kosten und eine erschwerte Bedienung verursacht.

Ebenso ist für ein Nassarm-Wischsystem aus der DE 10 2010 052 314 A1 eine Verriegelung mittels eines Schiebers bekannt. Auch dieser Schieber würde den Einsatz der bevorzugten Abdeckkappe verhindern. Zudem wird erschwert die vorgesehene Einführung von Riegelwarzen in entsprechende Ausnehmungen die Bedienbarkeit, da diese vom Schieber abgedeckt und somit für den Benutzer nicht sichtbar sind. Ebenfalls wird hohe Anzahl von Bestandteilen der Ver- bzw. Entriegelungsmittel benötigt, die höhere Kosten und eine erschwerte Bedienung verursacht.

DE 11 2015 003232 T5 offenbart einen Adapter zum Verbinden eines Scheibenwischerblatts mit einem Antriebsarm des Blatts, wobei der Adapter ausgebildet ist, um mit einem Steckverbinder des Blatts mit einem Freiheitsgrad zum Schwenken um eine Anlenkachse verbunden zu sein, wobei der Adapter außerdem ausgebildet ist, um in ein Endteil in Gabelform des Arms eingefügt zu sein, wobei der Adapter Verriegelungsmittel, die elastisch verformbar sind, die ausgebildet sind, um mit dem Endteil zusammenzuwirken, um den Adapter fest mit dem Endteil zu verbinden, und Mittel zum Betätigen der Verriegelungsmittel, die von den Verriegelungsmitteln getrennt sind, umfasst.

Als weiterer Stand der Technik sind die CA 2 898 928 A1 und US 2014/259507 A1 zu nennen.

Zusammenfassend können bei bekannten Vorrichtungen zum Verbinden eines Wischblatts mit einem Wischarm die Ver- bzw. Entriegelungsmittel bei Überbelastung leicht brechen und die Bedienung ist durch den Einsatz von kleinteiligen Ver- bzw. Entriegelungsmitteln erschwert. Die hohe Anzahl von Bestandteilen der bekannten Ver- bzw. Entriegelungsmittel ist dabei auch mit erhöhten Produktions- und Herstellungskosten verbunden. Zudem sind die bekannten Vorrichtungen nicht für den Einsatz sowohl in einem Standard-Wischsystem ohne Nassarm als auch einem Nassarmsystem mit Abdeckkappe geeignet.

Der vorliegenden Erfindung liegt daher die Aufgabe zugrunde, eine kostengünstige und sichere Vorrichtung zum Verbinden eines Wischblatts mit einem Wischarm für ein Scheibenwischsystem eines Kraftfahrzeugs bereitzustellen, die eine einfache Bedienung erlaubt und ein Abbrechen der Ver- bzw. Entriegelungsmittel bei Überbelastung verhindert.

### Zusammenfassung der Erfindung

Die erfindungsgemäße Lösung der Aufgabe erfolgt durch die Merkmale der unabhängigen Ansprüche. Vorteilhafte Weiterbildungen der Erfindung ergeben sich aus den Unteransprüchen.

Erfindungsgemäß wird diese Aufgabe gelöst durch eine Vorrichtung zum Verbinden eines Wischblatts mit einem Wischarm für ein Scheibenwischsystem eines Kraftfahrzeugs, umfassend einen Adapter, der mit dem Wischblatt verbindbar ausgestaltet ist; ein Aufnahmeelement, das mit dem Wischarm verbindbar ausgestaltet ist und eine Adapteröffnung zum Aufnehmen des Adapters aufweist; wobei der Adapter wenigstens zwei zueinander verformbare Verriegelungsbereiche aufweist, die dazu eingerichtet sind, in einer Verriegelungsstellung den Adapter mit dem Aufnahmeelement zu verriegeln; und ein Betätigungsmittel zum Entriegeln der Verriegelungsbereiche, wobei in einer Entriegelungsstellung das Betätigungsmittel in eine Eingriffsöffnung des Aufnahmeelements eingreift und dabei die zwei Verriegelungsbereiche durch das Betätigungsmittel so zueinander verformt sind, dass der Adapter durch die Adapteröffnung entnehmbar ist.

Durch den Eingriff des Betätigungsmittels in die Eingriffsöffnung können die zwei zueinander verformbaren Verriegelungsbereiche gleichzeitig mit nur einer Betätigung eines Benutzers zueinander verformt werden, was die Bedienung erheblich vereinfacht. Zudem wird die zum Ver- und Entriegeln benötigte Kraft auf wenigstens zwei Verriegelungsbereiche aufgeteilt, wodurch die Belastbarkeit der Vorrichtung insgesamt erhöht wird. Darüber hinaus ist in der erfindungsgemäßen Vorrichtung der Adapter wenigstens zweifach über die Verriegelungsbereiche mit der Adapteraufnahme verriegelt, was die Sicherheit der Verriegelung deutlich verbessert. Da die Vorrichtung auch nur wenige Bestandteile aufweist, ist sie zudem kostengünstig herstellbar.

In einer besonders bevorzugten Ausführung ist das Betätigungsmittel entlang einer Betätigungsrichtung betätigbar und ein Abstand zwischen den beiden Verriegelungsbereichen, der orthogonal zu einer Betätigungsrichtung ist, ist in der Verriegelungsstellung größer als in der Entriegelungsstellung. Somit kann auf einfache Art und Weise der Abstand zwischen den beiden Verriegelungsbereichen mit nur einer Bewegung des Betätigungsmittels entlang der Betätigungsrichtung verringert werden. Der besagte Abstand wird dabei so verringert, dass der Adapter durch die Adapteröffnung entnehmbar ist.

In einer weiteren besonders bevorzugten Ausführungsform ist die Eingriffsöffnung an einer Stirnseite der erfindungsgemäßen Vorrichtung angeordnet. Diese Anordnung ermöglicht den Einsatz sowohl in einem Standard-Wischsystem ohne Nassarm als auch einem Nassarmsystem mit Abdeckkappe. Durch diese stirnseitige Anordnung der Eingriffsöffnung kann sich die Abdeckkappe beginnend bei der Eingriffsöffnung über den restlichen Wischarm erstrecken. Dabei können Bereiche abdeckt werden, die bei einer bekannten Top-Lock-Verriegelung nicht abgedeckt werden dürften. Bevorzugt ist in dieser Ausführungsform die Vorrichtung länglich ausgebildet. Weiter bevorzugt ist dabei die Eingriffsöffnung gegenüber einer Verbindungsseite des Aufnahmeelements angeordnet, wobei an der Verbindungsseite das Aufnahmeelement mit dem Wischarm verbunden ist.

In einer Ausführungsform weist wenigstens einer der Verriegelungsbereiche einen keilförmigen Querschnitt auf. Dadurch ist die Vorrichtung besonders gut gegenüber einwirkenden Kräften bei der Betätigung belastbar. Ein spitz zulaufendes Ende des Verriegelungsbereichs steht dabei mit dem Betätigungsmittel in Verbindung, und die Keilgeometrie erhöht die Bruchsicherheit des Verriegelungsbereichs.

In einer weiteren Ausführungsform entspricht die Adapteröffnung der Eingriffsöffnung. Da nur eine Öffnung benötigt wird, werden sowohl die Herstellung als auch die Bedienung der Vorrichtung weiter vereinfacht.

In einer bevorzugten Ausführungsform weisen die Verriegelungsbereiche jeweils eine Rastnase auf, und wobei die Rastnase in der Verriegelungsstellung in eine Rastöffnung des Aufnahmeelements eingreift. Durch die Verrastung eines Verriegelungsbereichs mit der Rastöffnung des Aufnahmeelements wird eine sichere und gut lösbare Verbindung zwischen dem Adapter und dem Aufnahmeelement gewährleistet.

In einer besonders bevorzugten Ausführung weist das Betätigungsmittel einen Druckknopf auf, und an dem Druckknopf sind wenigstens zwei Entriegelungsbereiche mit jeweils einer Anlaufkontur angeordnet, die dazu geeignet sind, in der Entriegelungsstellung die Verriegelungsbereiche zueinander zu verformen. Die Anlaufkontur ist dabei so ausgebildet, dass durch eine Betätigung bzw. Bewegung des Druckknopfes die Verriegelungsbereiche zueinander verformt werden. Somit wird eine besonders effiziente Entriegelung gewährleistet.

In einer weiteren Ausführungsform weisen die Verriegelungsbereiche jeweils ein Endstück auf. Beim Eingriff des Betätigungsmittels in die Eingriffsöffnung liegt dabei die Anlaufkontur an dem Endstück an. Das Anliegen ermöglicht eine besonders einfache Art und Weise der Kraftübertragung vom Betätigungsmittel auf die Verriegelungsbereiche, um diese zueinander zu verformen.

Besonders bevorzugt ist die Anlaufkontur dabei so ausgebildet ist, dass bei einer Verschiebung des Betätigungsmittels entlang der Betätigungsrichtung hin zur Entriegelungsstellung das Endstück eine Bewegung entlang der Anlaufkontur ausführt. Somit können die Verriegelungsbereiche besonders einfach für die Entriegelungsstellung zueinander verformt werden.

In weiteren Ausführungsform ist das Betätigungsmittel so ausgebildet, dass beim Eingriff in die Eingriffsöffnung die Anlaufkontur wenigstens in einem Teilbereich gegenüber der Betätigungsrichtung geneigt ist. Dadurch kann das jeweilige Endstück an der entsprechenden Anlaufkontur entlang verschoben werden, wodurch sich die Verriegelungsbereiche zueinander und hin zur Betätigungsrichtung verformen. Dadurch wird eine gut kontrollierbare Verformung der Verriegelungsbereiche gewährleistet.

Das Aufnahmeelement kann dabei in allen Ausführungsformen der vorliegenden Erfindung einstückig mit dem Wischarm verbunden sein. Durch die einstückige Ausbildung bzw. Verbindung kann ein kostengünstiges Scheibenwischsystem bereitgestellt werden. Alternativ können das Aufnahmeelement und der Wischarm zweiteilig ausgebildet sind. Bevorzugt sind sie dann miteinander lösbar verbunden. Der modulare Aufbau vereinfacht dann den Einsatz der erfindungsgemäßen Vorrichtung für verschiedene Wischarme.

Die weiter oben genannte Aufgabe wird ebenfalls durch ein Kraftfahrzeug gelöst, das mindestens eine der zuvor offenbarten Vorrichtungen aufweist. Die genannten Vorteile gelten adäquat.

### Figurenbeschreibung

Ausführungsformen der Erfindung werden nachstehend anhand der Figuren beschrieben. Dabei zeigen:
Figur 1 eine schematische Schnittansicht einer Ausführungsform einer erfindungsgemäßen Vorrichtung in einer Verriegelungsstellung,
Figur 2 eine schematische Schnittansicht einer Ausführungsform einer erfindungsgemäßen Vorrichtung in einer Entriegelungsstellung, und
Figur 3 eine schematische Schnittansicht einer Ausführungsform einer erfindungsgemäßen Vorrichtung in einer Entriegelungsstellung ähnlich zu Figur 2.

### Detaillierte Beschreibung

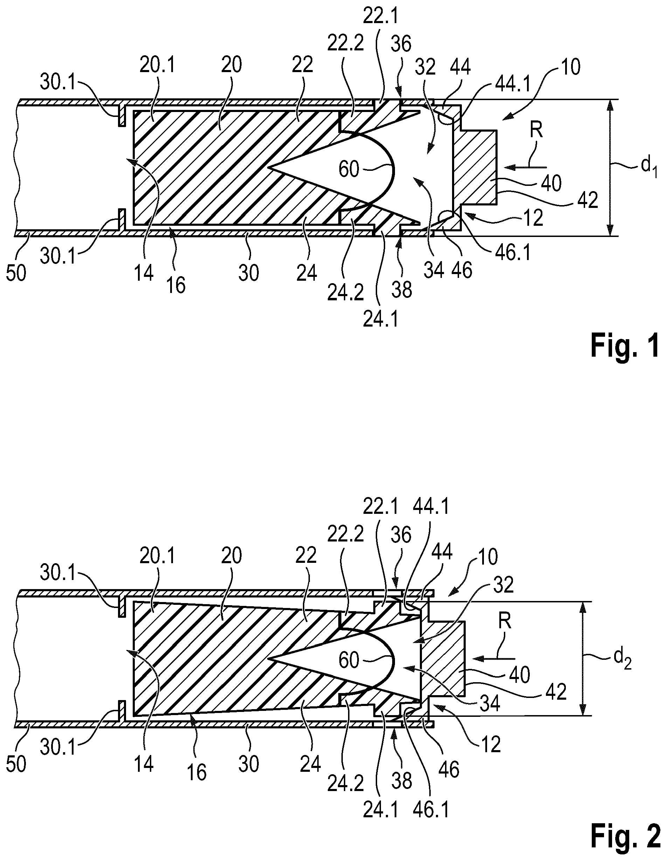

Figur 1 zeigt eine erfindungsgemäße Vorrichtung 10 zum Verbinden eines Wischblatts mit einem Wischarm 50 für ein Scheibenwischsystem eines Kraftfahrzeugs. Die Vorrichtung 10 umfasst dabei einen Adapter 20, ein Aufnahmeelement 30 und ein Betätigungsmittel 40. Figur 1 zeigt dabei eine Verriegelungsstellung der Vorrichtung 10, in der der Adapter 20 mit dem Aufnahmeelement 30 verriegelt ist. Am Adapter 20 kann ein Wischblatt zur Scheibenreinigung befestigt werden, was zur Vereinfachung in Figur 1 nicht gezeigt ist.

Das Aufnahmeelement 30 kann, wie in Figur 1 schematisch gezeigt, so mit dem Wischarm 50 verbunden sein, dass es mit dem Wischarm 50 einstückig ausgebildet ist. Das Aufnahmeelement 30 bildet so einen Bestandteil des Wischarms 50. Es ist aber auch vorstellbar, dass das Aufnahmeelement 30 und der Wischarm 50 zweiteilig ausgebildet sind. Bevorzugt sind sie in diesem Fall lösbar miteinander verbunden. Der Wischarm 50 ist an einem Ende am Kraftfahrzeug befestigt und wird durch bekannte Antriebsmittel in einer Wischbewegung zur Scheibenreinigung angetrieben (nicht gezeigt).

Das Aufnahmeelement 30 weist vorzugsweise einen Anschlag 30.1 zum Begrenzen der Bewegung des Adapters 20 im Aufnahmeelement 30 auf, damit ein Benutzer die korrekte Verriegelungsstellung des Adapters 20 im Aufnahmeelement 30 einfacher finden kann.

Wie in Figur 1 erkennbar, ist das Aufnahmeelement 30 vorzugsweise hohlförmig gebildet und dazu eingerichtet, den Adapter 20 aufzunehmen. Dabei ist der Adapter 20 durch eine Adapteröffnung 32 in das Aufnahmeelement 30 einschiebbar. In Figur 1 ist eine Ausführungsform dargestellt, bei der die Adapteröffnung 32 an einer Stirnseite 12 der beispielsweise länglich ausgebildeten Vorrichtung 10 angeordnet ist. Die Stirnseite 12 befindet sich vorzugsweise gegenüber einer Wischarmseite 14, an der das Aufnahmeelement 30 der Vorrichtung 10 mit dem Wischarm 50 verbunden ist.

In einer anderen Ausführungsform ist es auch vorstellbar, dass die Adapteröffnung 32 an einer Unterseite 16 der Vorrichtung 10 angeordnet ist, wobei die Unterseite 16 hin zur Fahrzeugscheibe eines Kraftfahrzeugs zeigt, wenn die Vorrichtung 10 am Fahrzeug eingebaut ist. Zum Einführen bzw. Entnehmen des Adapters 20 muss dann der Wischarm 50 von der Fensterscheibe angehoben werden.

Mit Bezug zum Adapter 20 ist von besonderer Bedeutung, dass die beiden Verriegelungsbereiche 22 und 24 unter Krafteinwirkung zueinander verformbar sind. Vorzugsweise liegen die Verriegelungsbereiche 22 und 24 einander gegenüber, was diese Art der Verformung erleichtert. Bevorzugt sind die Verriegelungsbereiche 22 und 24 in allen Ausführungsformen elastisch verformbar.

Weiter ist in Figur 1 erkennbar, dass der Adapter 20 wenigstens einen ersten Verriegelungsbereich 22 mit einer ersten Rastnase 22.1 und einem ersten Endstück 22.2 und darüber hinaus einen zweiten Verriegelungsbereich 24 mit einer zweiten Rastnase 24.1 und einem zweiten Endstück 24.2 aufweist. Die Endstücke 22.2 und 24.2 weisen dabei zur Stirnseite 12 der Vorrichtung 10 hin. In der in Figur 1 gezeigten Verriegelungsstellung greift die erste Rastnase 22.1 in eine erste Rastöffnung 36 ein. Dementsprechend greift die zweite Rastnase 24.1 in eine zweite Rastöffnung 38 ein. Wenigstens durch diese Verrastungen ist der Adapter 20 mit dem Aufnahmeelement 30 verriegelt. Es ist dabei vorstellbar, dass es zusätzliche Verriegelungsbereiche gibt, die wie beschrieben mit dem Aufnahmeelement 30 verrastet sind.

In der in Figur 1 gezeigten Verriegelungsstellung sind die zwei Verriegelungsbereiche 22 und 24 nicht zueinander verformt und weisen einen Verriegelungsabstand d₁ zueinander auf. Dabei verläuft der Verriegelungsabstand d₁ zwischen den beiden Verriegelungsbereichen 22 und 24 orthogonal zu einer Betätigungsrichtung R des Betätigungsmittels 40.

Zudem ist in Figur 1 erkennbar, dass die Verriegelungsbereiche 22 und 24 einen keilförmigen Querschnitt aufweisen, wobei die Basis der Keilform an einem Adaptergrundkörper 20.1 angeordnet ist und sich die Keilform hin zu den Endstücken 22.2 und 24.2 verjüngt. Dies ermöglicht eine besonders belastbare Verformung der Verriegelungsbereiche 22 und 24 zueinander.

Bevorzugt ist der Adapter 20 einstückig ausgebildet. Jedoch ist auch vorstellbar, dass die genannten Elemente des Adapters aus einzelnen Bestandteilen bestehen und zusammengesetzt werden.

In allen Ausführungsformen kann der Adapter 20 zusätzlich so ausgebildet sein, dass die Verriegelungsbereiche 22 und 24 bei den Endstücken 22.2 und 24.2 umlaufend miteinander verbunden sind, sodass ein Verriegelungsbereich 22 bzw. 24 durch seine Rastnase 22.1 bzw. 24.1 definiert ist. Bei Betrachtung entlang einer Entriegelungsrichtung R in Figur 1 würde sich so eine umlaufende Begrenzungslinie ergeben (nicht gezeigt). Es ist aber auch vorstellbar, dass die Verriegelungsbereiche 22 und 24 mittels Aussparungen im Adapter 20 voneinander getrennt sind.

Zur Entriegelung des Adapters 20 weist das Aufnahmeelement 30 eine Eingriffsöffnung 34 auf. Bevorzugt ist diese an der Stirnseite 12 des Aufnahmeelements 30 angeordnet. Die Eingriffsöffnung 34 ist so gestaltet, dass in der Verriegelungsstellung das Betätigungsmittel 40 wie in Figur 1 gezeigt in das Aufnahmeelement 30 in einer ersten Betätigungsstellung eingreift. In der ersten Betätigungsstellung befindet sich das Betätigungsmittel im Eingriff mit dem Aufnahmeelement 30 und die Verriegelungsbereiche 22 und 24 sind noch nicht durch das Betätigungsmittel 40 zueinander verformt. Das Betätigungsmittel 40 kann in der ersten Betätigungsstellung beispielsweise mit dem Aufnahmeelement 30 lösbar verrastet sein.

Das Betätigungsmittel 40 weist wie in Figur 1 erkennbar als Grundelement einen Druckknopf 42 auf, an dem ein erster Entriegelungsbereich 44 mit einer ersten Anlaufkontur 44.1 und ein zweiter Entriegelungsbereich 46 mit einer zweiten Anlaufkontur 46.1 angeordnet sind.

Figur 2 stellt eine Entriegelungsstellung der Vorrichtung 10 dar. Hierzu wird das Betätigungsmittel 40 entlang der Betätigungsrichtung R in das Aufnahmeelement 30 weiter hinein bewegt. In der Entriegelungsstellung greift das Betätigungsmittel 40 mit den Entriegelungsbereichen 44 und 46 wie in Figur 2 gezeigt in die Eingriffsöffnung 34 des Aufnahmeelements 30 in einer zweiten Betätigungsstellung ein. In dieser zweiten Betätigungsstellung des Bestätigungsmittels 40, in der die Entriegelungsstellung erreicht ist, sind die Verriegelungsbereiche 22 und 24 zueinander durch das Betätigungsmittel 40 verformt.

Schon vor Erreichen der zweiten Betätigungsstellung liegt wie in Figur 1 erkennbar die Anlaufkontur 44.1 an dem entsprechenden Endstück 22.2 an, ebenso liegt die die Anlaufkontur 46.1 an dem entsprechenden Endstück 24.2 an. Durch die Verschiebung des Betätigungsmittels 40 von der ersten Betätigungsstellung hin zur zweiten Betätigungsstellung entlang der Betätigungsrichtung R führt das Endstück 22.2 eine Bewegung entlang der Anlaufkontur 44.1 aus. Analog führt das Endstück 24.2 eine Bewegung entlang der Anlaufkontur 46.1 aus. Somit werden die Verriegelungsbereiche 22 und 24 gleichzeitig und nur durch eine einzelne Verschiebung des Betätigungsmittels 40 zueinander verformt.

Bevorzugt ist das Betätigungsmittel 40 so ausgebildet, dass beim Eingriff in die Eingriffsöffnung 34 die Anlaufkonturen 44.1 und 46.1 wenigstens in einem Teilbereich gegenüber der Betätigungsrichtung R geneigt sind. Dies vereinfacht die Verformung bzw. ermöglicht eine vorher bestimmte Verformung der Verriegelungsbereiche 22 und 24 zueinander.

Wie in Figur 2 erkennbar, ist es auch vorstellbar, dass in der zweiten Betätigungsstellung bzw. in der Entriegelungsstellung die Endstücke 22.2 und 24.2 an einem anderen Teilbereich als dem geneigten Teilbereich der jeweiligen Anlaufkontur 44.1 bzw. 46.1 anliegen. Hier können die Endstücke 22.2 und 24.2 beispielsweise lösbar mit dem Betätigungsmittel 40 verbunden sein. Vorstellbar ist hierfür eine Verrastung. In diesem anderen Teilbereich können die Anlaufkonturen 44.1 bzw. 46.1 beispielsweise orthogonal zur Betätigungsrichtung ausgerichtet sein.

Dabei ist auch vorstellbar, dass in der Entriegelungsstellung die Rastnasen 22.1 und 24.1 an dem geneigten Teilbereich der Anlaufkontur 44.1 bzw. 46.1 anliegen. Dadurch kann die Verformung der beiden Verriegelungsbereiche 22 und 24 zueinander in der Entriegelungsstellung besser gesichert werden.

Da in der Entriegelungsstellung die zwei Verriegelungsbereiche 22 und 24 zueinander verformt sind, weisen sie einen Entriegelungsabstand d₂ zueinander auf, der kleiner als der Verriegelungsabstand d₁ ist. Dabei verläuft der Entriegelungsabstand d₂ zwischen den beiden Verriegelungsbereichen 22 und 24 orthogonal zu der Betätigungsrichtung R des Betätigungsmittels 40.

Dies bewirkt zum einen, dass in der Entriegelungsstellung die beiden Rastnasen 22.1 und 24.1 aus den jeweiligen Rastöffnungen 36 und 38 gelöst sind. Zum anderen ist der Adapter 20 in der Entriegelungsstellung so verformt, dass der Adapter 20 aus dem Aufnahmeelement 30 entnehmbar ist.

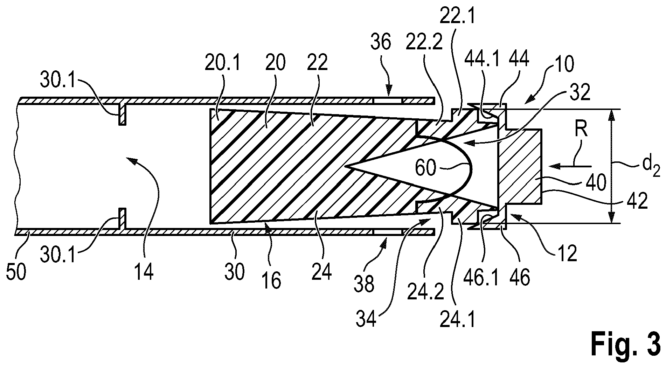

Diese Entnahme ist beispielshaft in Figur 3 gezeigt. In einer in Figur 3 gezeigten Ausführungsform entspricht die Adapteröffnung 32 der Eingriffsöffnung 34. Der Entriegelungsabstand d₂ ist dabei so gewählt, dass der Adapter 20 in seiner Entriegelungsstellung durch die Adapteröffnung 32 bzw. Eingriffsöffnung 34 an der Stirnseite 12 der Vorrichtung 10 entnehmbar bist. Das Betätigungsmittel 40 verbleibt dabei in seiner zweiten Betätigungsstellung, in der die Verriegelungsbereiche 22 und 24 zueinander verformt sind.

Umgekehrt ist auch vorstellbar, dass der Adapter 20 in der Entriegelungsstellung in das Aufnahmeelement 30 durch die Adapteröffnung 32 zur Montage eingeschoben werden kann. Bevorzugt wird der Adapter 20 dabei mit dem Betätigungsmittel 40 in seiner zweiten Betätigungsstellung eingeschoben. Es ist aber auch vorstellbar, dass der Adapter 20 in der Verriegelungsstellung in das Aufnahmeelement 30 eingeschoben wird und die Verriegelungsbereiche 22 und 24 erst durch die Adapteröffnung 32 zueinander verformt werden, damit der Adapter 20 vollständig in das Aufnahmeelement 30 aufgenommen zu werden kann.

Es ist aber auch vorstellbar, dass die Adapteröffnung 32 unterschiedlich zur Eingriffsöffnung 34 ist, wenn zum Beispiel die Adapteröffnung 32 an der Unterseite 16 der Vorrichtung 10 und die Eingriffsöffnung an der Stirnseite 12 der Vorrichtung 10 angeordnet sind. In diesem Fall ist der Adapter 20 in seiner Entriegelungsstellung durch die Adapteröffnung 32 an der Unterseite 16 der Vorrichtung 10 entnehmbar.

Grundsätzlich kann in allen Ausführungsformen optional in der Vorrichtung 10 ein Federelement 60 vorgesehen sein, um eine Rückstellkraft zwischen den Verriegelungsbereichen 22 und 24 zu bewirken. Das optionale Federelement ist wie in den Figuren 1 bis 3 gezeigt vorzugsweise zwischen den Verriegelungsbereichen 22 und 24 angeordnet. Die Rückstellkraft kann zum einen dazu dienen, die Stärke der Verrastung zwischen den Rastnasen 20 und dem Aufnahmeelement 30 zu erhöhen, wodurch der Adapter 20 besser im Aufnahmeelement 30 gesichert ist. Zum anderen können die Verriegelungsbereiche 22 und 24 zuverlässig zurück in die Verriegelungsstellung überführt werden, wenn sie zuvor wie oben beschrieben zueinander in die Entriegelungsstellung verformt waren.

Der Adapter 10, das Aufnahmeelement 30, das Betätigungsmittel 40 und das optionale Federelement 60 sind vorzugsweise aus Kunstoffen und/oder Metallen gebildet, die die oben beschriebenen Verrastungen, Verformungen und/oder Federwirkungen ermöglichen.

### Bezugszeichenliste

- 10: Vorrichtung
- 12: Stirnseite
- 14: Wischarmseite
- 16: Unterseite
- 20: Adapter
- 20.1: Adaptergrundkörper
- 22: erster Verriegelungsbereich
- 22.1: erste Rastnase
- 22.2: erstes Endstück
- 24: zweiter Verriegelungsbereich
- 24.1: zweite Rastnase
- 24.2: zweites Endstück
- 30: Aufnahmeelement
- 30.1: Anschlag
- 32: Adapteröffnung
- 34: Eingriffsöffnung
- 36: erste Rastöffnung
- 38: zweite Rastöffnung
- 40: Betätigungsmittel
- 42: Druckknopf
- 44: erster Entriegelungsbereich
- 44.1: erste Anlaufkontur
- 46: zweiter Entriegelungsbereich
- 46.1: zweite Anlaufkontur
- 50: Wischarm
- 60: Federelement
- R: Betätigungsrichtung
- d₁: Verriegelungsabstand
- d₂: Entriegelungsabstand

## Patentansprüche

1. Vorrichtung (10) zum Verbinden eines Wischblatts mit einem Wischarm (50) für ein Scheibenwischsystem eines Kraftfahrzeugs, umfassend
einen Adapter (20), der mit dem Wischblatt verbindbar ausgestaltet ist;
ein Aufnahmeelement (30), das mit dem Wischarm (50) verbindbar ausgestaltet ist und eine Adapteröffnung (32) zum Aufnehmen des Adapters (20) aufweist;
wobei der Adapter (20) wenigstens zwei zueinander verformbare Verriegelungsbereiche (22, 24) aufweist, die dazu eingerichtet sind, in einer Verriegelungsstellung den Adapter (20) mit dem Aufnahmeelement (30) zu verriegeln; **dadurch gekennzeichnet, dass** die Vorrichtung zusätzlich ein Betätigungsmittel (40) zum Entriegeln der Verriegelungsbereiche (22, 24) umfasst, wobei in einer Entriegelungsstellung das Betätigungsmittel (40) in eine Eingriffsöffnung (34) des Aufnahmeelements (30) eingreift und dabei die zwei Verriegelungsbereiche (22, 24) durch das Betätigungsmittel (40) so zueinander verformt sind, dass der Adapter (20) durch die Adapteröffnung (32) entnehmbar ist.

2. Vorrichtung (10) nach Anspruch 1, wobei das Betätigungsmittel (40) entlang einer Betätigungsrichtung (R) betätigbar ist und ein Abstand zwischen den beiden Verriegelungsbereichen (22, 24), der orthogonal zu einer Betätigungsrichtung (R) ist, in der Verriegelungsstellung größer als in der Entriegelungsstellung ist.

3. Vorrichtung (10) nach Anspruch nach Anspruch 1 oder 2, wobei die Eingriffsöffnung (34) an einer Stirnseite (12) der Vorrichtung (10) angeordnet ist.

4. Vorrichtung (10) nach einem der vorhergehenden Ansprüche, wobei wenigstens einer der Verriegelungsbereiche (22, 24) einen keilförmigen Querschnitt aufweist.

5. Vorrichtung (10) nach einem der vorhergehenden Ansprüche, wobei die Adapteröffnung (32) der Eingriffsöffnung (34) entspricht.

6. Vorrichtung (10) nach einem der vorhergehenden Ansprüche, wobei die Verriegelungsbereiche (22, 24) jeweils eine Rastnase (22.1, 24.1) aufweisen, und wobei die Rastnase (22.1, 24.1) in der Verriegelungsstellung in eine Rastöffnung (36, 38) des Aufnahmeelements (30) eingreift.

7. Vorrichtung (10) nach einem der vorhergehenden Ansprüche, wobei das Betätigungsmittel (40) einen Druckknopf (42) aufweist, und wobei an dem Druckknopf (42) wenigstens zwei Entriegelungsbereiche (44, 46) mit jeweils einer Anlaufkontur (44.1, 46.1) angeordnet sind, die dazu geeignet sind, in der Entriegelungsstellung die Verriegelungsbereiche (22, 24) zueinander zu verformen.

8. Vorrichtung (10) nach Anspruch 7, wobei die Verriegelungsbereiche (22, 24) jeweils ein Endstück (22.2, 24.2) aufweisen, und wobei beim Eingriff des Betätigungsmittels (40) in die Eingriffsöffnung (34) die Anlaufkontur (44.1, 46.1) an dem Endstück (22.2, 24.2) anliegt.

9. Vorrichtung (10) nach Anspruch 8, wobei die Anlaufkontur (44.1, 46.1) so ausgebildet ist, dass bei einer Verschiebung des Betätigungsmittels (40) entlang der Betätigungsrichtung (R) hin zur Entriegelungsstellung das Endstück (22.2, 24.2) eine Bewegung entlang der Anlaufkontur (44.1, 46.1) ausführt.

10. Vorrichtung (10) nach Anspruch 9, wobei das Betätigungsmittel (40) so ausgebildet ist, dass beim Eingriff in die Eingriffsöffnung (34) die Anlaufkontur (44.1, 46.1) wenigstens in einem Teilbereich gegenüber der Betätigungsrichtung (R) geneigt ist.

11. Kraftfahrzeug, umfassend mindestens eine Vorrichtung (10) nach einem der vorhergehenden Ansprüche.

## Claims

1. Apparatus (10) for connecting a wiper blade to a wiper arm (50) for a screen wiping system of a motor vehicle, comprising
an adapter (20) which is of connectable configuration to the wiper blade;
a receiving element (30) which is of connectable configuration to the wiper arm (50) and has an adapter opening (32) for receiving the adapter (20);
the adapter (20) having at least two locking regions (22, 24) which can be deformed with respect to one another and are configured to lock the adapter (20) to the receiving element (30) in a locked position; **characterized in that** the apparatus additionally comprises an actuating means (40) for unlocking the locking regions (22, 24), the actuating means (40) engaging into an engagement opening (34) of the receiving element (30) in an unlocked position, and the two locking regions (22, 24) being deformed in the process by way of the actuating means (40) with respect to one another in such a way that the adapter (20) can be removed through the adapter opening (32).

2. Apparatus (10) according to Claim 1, it being possible for the actuating means (40) to be actuated along an actuating direction (R), and a spacing between the two locking regions (22, 24) which is orthogonal with respect to an actuating direction (R) being greater in the locked position than in the unlocked position.

3. Apparatus (10) according to Claim 1 or 2, the engagement opening (34) being arranged on an end side (12) of the apparatus (10).

4. Apparatus (10) according to one of the preceding claims, at least one of the locking regions (22, 24) having a wedge-shaped cross section.

5. Apparatus (10) according to one of the preceding claims, the adapter opening (32) corresponding to the engagement opening (34).

6. Apparatus (10) according to one of the preceding claims, the locking regions (22, 24) each having a latching lug (22.1, 24.1), and the latching lug (22.1, 24.1) engaging into a latching opening (36, 38) of the receiving element (30) in the locked position.

7. Apparatus (10) according to one of the preceding claims, the actuating means (40) having a pushbutton (42), and at least two unlocking regions (44, 46) each being arranged with a run-on contour (44.1, 46.1) on the pushbutton (42), which unlocking regions (44, 46) are suitable for deforming the locking regions (22, 24) with respect to one another in the unlocked position.

8. Apparatus (10) according to Claim 7, the locking regions (22, 24) each having an end piece (22.2, 24.2), and the run-on contour (44.1, 46.1) bearing against the end piece (22.2, 24.2) in the case of the engagement of the actuating means (40) into the engagement opening (34).

9. Apparatus (10) according to Claim 8, the run-on contour (44.1, 46.1) being configured in such a way that, in the case of a displacement of the actuating means (40) along the actuating direction (R) toward the unlocked position, the end piece (22.2, 24.2) carries out a movement along the run-on contour (44.1, 46.1).

10. Apparatus (10) according to Claim 9, the actuating means (40) being configured in such a way that, in the case of the engagement into the engagement opening (34), the run-on contour (44.1, 46.1) is inclined at least in one part region with respect to the actuating direction (R) .

11. Motor vehicle, comprising at least one apparatus (10) according to one of the preceding claims.

## Revendications

1. Dispositif (10) destiné à relier un balai d'essuie-glace à un bras d'essuie-glace (50) pour un système d'essuie-glace d'un véhicule à moteur, comprenant
un adaptateur (20), qui est configuré de manière à pouvoir être relié au balai d'essuie-glace ;
un élément de réception (30), qui est configuré de manière à pouvoir être relié au bras d'essuie-glace (50) et qui comporte une ouverture (32) d'adaptateur destinée à recevoir l'adaptateur (20) ;
l'adaptateur (20) comportant au moins deux zones de verrouillage (22, 24) déformables l'une par rapport à l'autre, qui sont mises au point pour verrouiller l'adaptateur (20) sur l'élément de réception (30) dans une position de verrouillage, **caractérisé en ce que** le dispositif comprend en supplément un moyen d'actionnement (40) pour déverrouiller les zones de verrouillage (22, 24), le moyen d'actionnement (40) venant en prise avec une ouverture de prise (34) de l'élément de réception (30) dans une position de déverrouillage et les deux zones de verrouillage (22, 24) étant déformées l'une par rapport à l'autre par le moyen d'actionnement (40) de telle sorte que l'adaptateur (20) peut être retiré par l'ouverture (32) d'adaptateur.

2. Dispositif (10) selon la revendication 1, le moyen d'actionnement (40) pouvant être actionné le long d'une direction d'actionnement (R) et une distance entre les deux zones de verrouillage (22, 24), qui est orthogonale à une direction d'actionnement (R), étant plus grande dans la position de verrouillage que dans la position de déverrouillage.

3. Dispositif (10) selon la revendication 1 ou 2, l'ouverture de prise (34) étant disposée sur un côté frontal (12) du dispositif (10).

4. Dispositif (10) selon l'une des revendications précédentes, au moins une des zones de verrouillage (22, 24) comportant une section transversale en forme de coin.

5. Dispositif (10) selon l'une des revendications précédentes, l'ouverture (32) d'adaptateur correspondant à l'ouverture de prise (34).

6. Dispositif (10) selon l'une des revendications précédentes, les zones de verrouillage (22, 24) comportant chacune un ergot d'encliquetage (22.1, 24.1), et l'ergot d'encliquetage (22.1, 24.1) venant en prise avec une ouverture d'encliquetage (36, 38) de l'élément de réception (30) dans la position de verrouillage.

7. Dispositif (10) selon l'une des revendications précédentes, le moyen d'actionnement (40) comportant un bouton poussoir (42) et au moins deux zones de déverrouillage (44, 46) avec chacune un contour de contact (44.1, 46.1) étant disposées sur le bouton poussoir (42), lesquelles sont adaptées pour déformer les zones de verrouillage (22, 24) l'une par rapport à l'autre dans la position de déverrouillage.

8. Dispositif (10) selon la revendication 7, les zones de verrouillage (22, 24) comportant chacune une pièce d'extrémité (22.2, 24.2), et le contour de contact (44.1, 46.1) reposant sur la pièce d'extrémité (22.2, 24.2) lorsque le moyen d'actionnement (40) vient en prise avec l'ouverture de prise (34).

9. Dispositif (10) selon la revendication 8, le contour de contact (44.1, 46.1) étant formé de telle sorte que, lorsque le moyen d'actionnement (40) est coulissé le long de la direction d'actionnement (R) vers la position de déverrouillage, la pièce d'extrémité (22.2, 24.2) exécute un déplacement le long du contour de contact (44.1, 46.1).

10. Dispositif (10) selon la revendication 9, le moyen d'actionnement (40) étant formé de telle sorte que, lors de la prise avec l'ouverture de prise (34), le contour de contact (44.1, 46.1) est incliné par rapport à la direction d'actionnement (R) au moins dans une zone partielle.

11. Véhicule à moteur, comprenant un dispositif (10) selon l'une des revendications précédentes.
